# EUROPÄISCHE PATENTSCHRIFT

(11) **EP 0 393 211 B1**
(45) Veröffentlichungstag und Bekanntmachung des Hinweises auf die Patenterteilung: **23.06.1993**
(21) Anmeldenummer: 89106807.4
(22) Anmeldetag: 17.04.1989
(51) Int. Cl.: F16D 51/22, F16D 65/22, F16C 1/12

(54) **Trommelbremse eines Kraftfahrzeugs mit einer Feststellbremse**
Drum brake for a motor vehicle, comprising a parking brake
Frein à tambour pour véhicule comportant un frein de parquage

(43) Veröffentlichungstag der Anmeldung: 24.10.1990
(73) Patentinhaber: LUCAS INDUSTRIES public limited company, Birmingham, B19 2XF West Midlands (GB)
(72) Erfinder: Brix, Hermann, 5407 Boppard 4 (DE); Op den Camp, Eckhart, D-5400 Koblenz (DE)
(74) Vertreter: von Hellfeld, Axel, Dr. Dipl.-Phys.

(56) Entgegenhaltungen:
- EP-A- 0 311 346
- DE-C- 2 802 980
- DE-U- 8 707 917
- DE-U- 8 804 606
- FR-A- 996 397
- FR-A- 1 030 562
- FR-A- 2 596 540
- GB-A- 2 185 297

## Beschreibung

Die Erfindung betrifft eine Trommelbremse eines Kraftfahrzeugs mit einer Feststellbremse gemäß dem Oberbegriff des Anspruchs 1.

Der Bremsseilzug einer Feststellbremse ist üblicherweise mit einem in der Trommelbremse angeordneten Handbremshebel lösbar verbunden, so daß der Bremsseilzug austauschbar ist. Bei den allgemein üblichen Trommelbremsen wird der Bremsseilzug bei seiner Montage durch eine mit dem Handbremshebel verbundene Halterung geführt, die der Bremsseilzug mit einem an einem Ende angesetzten, verdickten Nippel hintergreift. Bei dieser herkömmlichen Ausgestaltung der Bremsseilzugbefestigung ist die Montage nur in einem Zustand möglich, in dem die Trommelbremse geöffnet ist, d.h. bevor die Bremstrommel an der Trommelbremse angebracht ist. Dies läuft jedoch den Erfordernissen eines rationellen Zusammenbaus von Kraftfahrzeugen zuwider, wonach fertige Untergruppen der Komponenten eines Kraftfahrzeugs an das Montageband geliefert werden sollen, die dort nur noch in das Fahrzeug einzubauen sind.

In dem DE-GM 87 02 576 ist daher bereits eine Trommelbremse vorgeschlagen worden, bei der ein Zwischenseilzug an dem Handbremshebel befestigt ist und zur Außenseite der Trommelbremse führt, wobei das zur Außenseite der Trommelbremse freiliegende Ende des Zwischenseilzugs mit einem Zugglied versehen ist, in das der eigentliche Bremsseilzug eingehängt werden kann. Diese Ausbildung hat den Vorteil, daß der Bremsseilzug an der mit der Bremstrommel versehenen Trommelbremse befestigt werden kann, jedoch ist diese bekannte Konstruktion verhältnismäßig aufwendig.

In der EP-A-0 311 346 ist eine gattungsgemäße Trommelbremse beschrieben, bei der der Bremsseilzug für die Feststellbremse im zusammengebauten Zustand der Bremse montiert werden kann, beispielsweise nachdem die komplette Trommelbremse an der Achse eines Fahrzeugs befestigt worden ist. Zur Montage des Bremsseilzuges wird dieser mit seinem endseitigen Nippel durch eine Schraubenfeder gezogen, deren eines Ende an einer mit dem Handbremshebel verbundenen Halterung befestigt ist und deren anderes Ende durch eine Öffnung in der Ankerplatte der Trommelbremse nach außen ragt. Die Schraubenfeder, deren Innendurchmesser etwas größer als der maximale Außendurchmesser des Nippels ist, bildet ein Führungsrohr für den Bremsseilzug. Die mit dem Handbremshebel verbundene Halterung ist in Vorschubrichtung des Nippels gesehen tunnelförmig ansteigend ausgeführt. Nachdem der Nippel durch die als tunnelförmige Rampe ausgebildete Halterung geschoben worden ist, schnappt der Bremsseilzug in einen ebenfalls an der Halterung ausgebildeten Schlitz und der Nippel hintergreift die Halterung. Sodann wird das nach außen ragende Ende der Schraubenfeder in die Trommelbremse hineingedrückt und die Öffnung in der Ankerplatte mittels einem in diese einrastenden Schnappverbinder geschlossen. Die Schraubenfeder, der einrastende Schnappverbinder und die Notwendigkeit, ein unteres Ende des Handbremshebels relativ kompliziert zu einer tunnelförmigen Rampe zu biegen, machen diese Lösung insgesamt teuer.

Aus der FR-C-969 397 ist eine Trommelbremse bekannt, deren Bremsseilzug sich durch ein fest mit der Ankerplatte verbundenes Führungsrohr erstreckt, das in einem Abstand vor einer Halterung endet, an der der Bremsseilzug in der Trommelbremse befestigt ist. Zwischen dem Ende des Führungsrohres und der Halterung ist der Bremsseilzug von einer Schraubenfeder umgeben, die sich mit ihrem einen Ende am Führungsrohr und mit ihrem anderen Ende an der Halterung abstützt. Das Führungsrohr dient bei dieser Trommelbremse dazu, den Bremsseilzug so durch die Ankerplatte zu führen, daß dessen Abnutzung im Betrieb vermindert wird. Bei dieser Bremse muß der Bremsseilzug auf herkömmliche Art bei zerlegter Bremse montiert werden.

Der Erfindung liegt die Aufgabe zugrunde, eine Trommelbremse, bei der der Bremsseilzug im zusammengebauten Zustand der Trommelbremse an deren Handbremshebel befestigbar ist, so weiterzubilden, daß der Aufbau der Trommelbremse vereinfacht und ihre Herstellung kostengünstiger möglich ist.

Diese Aufgabe wird erfindungsgemäß mit einer Trommelbremse gelöst, die die Merkmale des Anspruchs 1 aufweist. Vorteilhafte Ausgestaltungen und Weiterbildungen der Erfindung sind in den Unteransprüchen gekennzeichnet.

Bei der erfindungsgemäßen Trommelbremse ist das zur Außenseite der Trommelbremse hin offene Ende des Führungsrohres an der Ankerplatte der Trommelbremse befestigt, während das andere Ende in einem Abstand vor der Halterung für den Bremsseilzug endet. Der Bremsseilzug kann somit problemlos von außen über das Führungsrohr in die Trommelbremse eingeführt werden. Die Führungsbahn für den mit dem einen Ende des Bremsseilzugs fest verbundenen Nippel ist durch eine rampenförmig ansteigende freie Randkante des umgebogenen unteren Endabschnitts gebildet, auf die der Nippel bei seinem Vorschub aufläuft. Dabei steigt die rampenförmige Randkante um ein solches Maß an, daß im Verlaufe des Vorschubs des Nippels auf der Randkante der Bremsseilzug gegen die Innenfläche des Führungsrohres gedrückt wird. Dadurch wir der Bremsseilzug zumindest leicht gebogen, bevor der Nippel die Rückseite der Halterung erreicht, wodurch in dem Bremsseilzug eine federnde Rückstellkraft hervorgerufen wird, die den Nippel hinter der Rückseite der Halterung nach unten in die Befestigungslage schnappen läßt. Die Öffnungsbreite des umgebogenen Endabschnitts, auf dessen Randkante der Nippel aufläuft, nimmt vorteilhaft von der Vorderseite des Endabschnitts zu dessen Rückseite hin ab, wobei sich die Öffnung zur Rückseite hin zweckmäßigerweise trichterförmig verjüngt.

Nach einem weiteren Vorschlag der Erfindung hat der Nippel die Form eines Kegelstumpfes, dessen kleine Querschnittsfläche dem freien Ende des Bremsseilzuges zugeordnet ist. In der Befestigungslage des Bremsseilzuges liegt damit die große Querschittsfläche des Kegelstumpfes an der Rückseite der Halterung an.

Die Öffnung des umgebogenen Endabschnitts sollte so bemessen sein, daß der zugehörige vordere Endabschnitt des Nippels zunächst in die Öffnung eintreten kann, wodurch der Nippel in der Öffnung zentriert wird. Bei seinem weiteren Vorschub läuft der Nippel auf die rampenförmige Randkante auf, auf der der Nippel bis zur Rückseite der Halterung geführt wird, die er schließlich hintergreift. Der Bremsseilzug durchgreift dabei die U-förmige Halterung.

Wenn nach einem weiteren Vorschlag der Erfindung die rampenförmige Randkante in einen rückwärten Sperrhaken endet, übergreift dieser den Nippel, so daß dieser im gespannten Zustand des Bremsseilzuges nicht in eine Freigabeposition geraten kann.

Der Bremsseilzug kann durch eine Zugfeder stets gespannt gehalten sein, die zwischen dem Handbremshebel und dem zugehörigen Bremsbacken angeordnet ist.
- Fig. 1: eine Ansicht einer geöffneten Trommelbremse und
- Fig. 2: die Bremsseilzugbefestigung gemäß Fig. 1 in einer vergrößerten Darstellung.

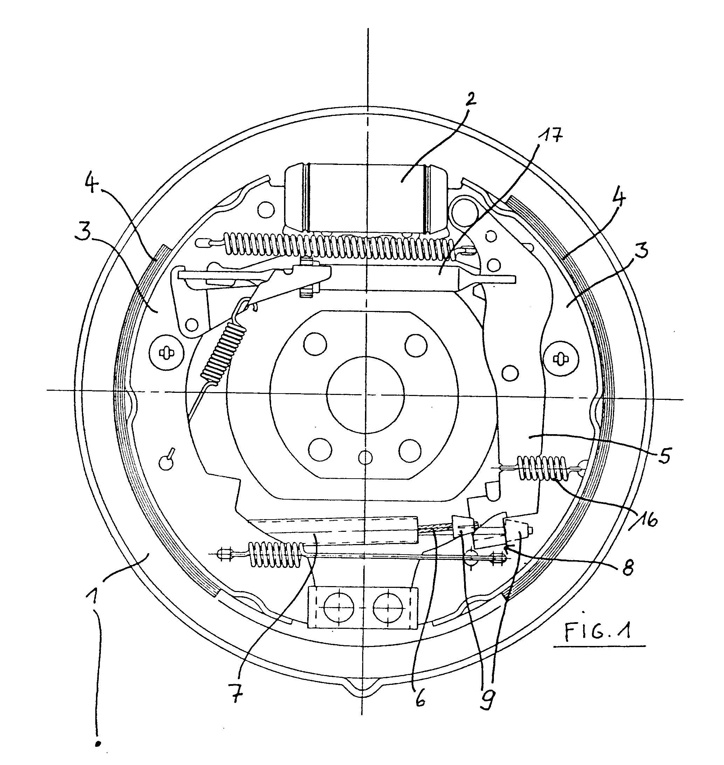

Die in Fig. 1 dargestellte Trommelbremse enthält eine Ankerplatte 1 an der ein Radbremszylinder 2 befestigt ist, der bei Betätigung der Betriebsbremse zwei Bremsbacken 3 voneinander wegschwenkt, bis deren Beläge 4 an eine nicht-dargestellte Bremstrommel angepreßt werden.

Der in Fig. 1 rechts dargestellte Bremsbacken 3 ist gelenkig mit einem Handbremshebel 5 verbunden, der seinerseits über ein Kraftübertragungsgestänge 17 mit dem anderen Bremsbacken 3 in Verbindung steht.

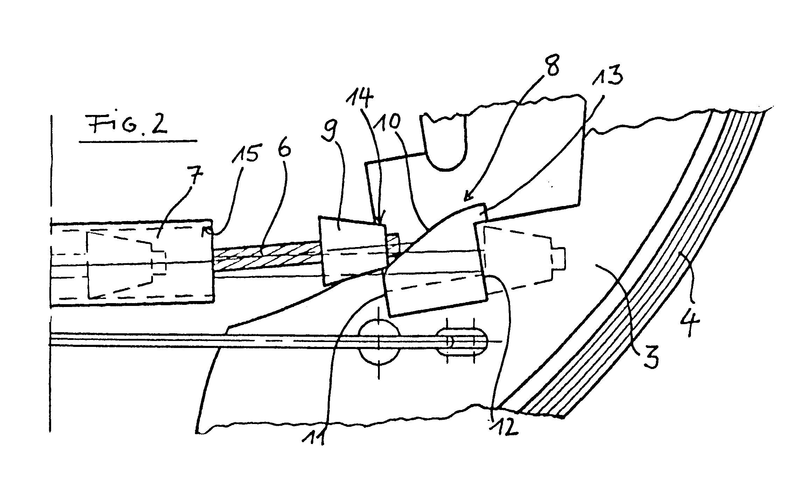

Es werden nun Einzelheiten der Befestigung eines Bremsseilzuges 6 an dem Handbremshebel 5 beschrieben, die in Fig. 2 vergrößert dargestellt sind. An der Ankerplatte 1 ist ein Führungsrohr 7 befestigt, das in einem Abstand vor einer Halterung 8 am unteren Ende des Handbremshebels 5 endet. Das Führungsrohr 7 erstreckt sich auf der anderen Seite bis zum Rand der Trommelbremse, so daß von außen der Bremsseilzug 6 bei geschlossener Trommelbremse in das Führungsrohr 7 eingeführt werden kann.

Der Bremsseilzug 6 ist an seinem vorderen Ende mit einem kegelstumpfförmigen Nippel 9 versehen, der fest mit dem Bremsseilzug 6 verbunden ist.

Die Halterung 8 für den Bremsseilzug 6 bzw. dessen Nippel 9 besteht aus einem etwa U-förmig umgebogenen unteren Randabschnitt des Handbremshebels 5, wobei die Randkante 10 des umgebogenen Endabschnitts von der Vorderseite 11 zur Rückseite 12 hin rampenförmig ansteigt. Die Randkante läuft an der Rückseite der Halterung 8 in einen Sperrhaken 13 aus.

Das Führungsrohr 7 hat einen Innendurchmesser, der etwas größer als der maximale Durchmesser des Nippels 9 ist. Wenn der Bremsseilzug 6 mit dem Nippel 9 bei geschlossener Trommelbremse von außen in das Führungsrohr 7 eingeführt und in Richtung der Halterung 8 vorgeschoben wird, tritt der Nippel 9 mit seinem vorderen Abschnitt 14 zunächst in die größer bemessene Öffnung der Halterung 8 an deren Vorderseite 11 ein und wird dort zentriert. Bei seinem weiteren Vorschub läuft der Nippel 9 auf die Rampe 10 auf und wird bei seiner Bewegung zur Rückseite 12 zunehmend nach oben abgelenkt. Bevor der Nippel 9 die Rückseite 12 der Halterung 8 erreicht, gerät der Bremsseilzug 6 bei 15 in Anlage an die Innenfläche des Führungsrohrs 7, so daß bei dem weiteren Vorschub des Nippels 9 in dem Bremsseilzug 6 eine Rückstellkraft erzeugt wird. Bei Erreichen der Rückseite 12 der Halterung 8 läßt diese Rückstellkraft den Nippel 9 in die gestrichelt dargestellte Position nach unten schnappen, wobei diese Befestigungslage des Nippels 9 durch den Sperrhaken 13 gesichert ist, wenn der Bremsseilzug 6 gespannt ist.

Der gespannte Zustand des Bremsseilzuges 6 wird durch eine Zugfeder 16 (Fig.1) gewährleistet, die zwischen dem Handbremshebel 5 und dem zugehörigen Bremsbacken 3 angeordnet ist.

## Patentansprüche

1. Trommelbremse eines Kraftfahrzeugs, mit einer Feststellbremse und einem zugehörigen Bremsseilzug (6), der mit einem in der Trommelbremse angeordneten Handbremshebel (5) lösbar verbunden ist, indem der Bremsseilzug (6) durch eine mit dem Handbremshebel (5) verbundene Halterung (8) geführt ist und diese mit einem mit dem zugehörigen freien Ende des Bremsseilzuges (6) verbundenen Nippel (9) größerer Querschnittsabmessungen hintergreift, wobei der Bremsseilzug (6) ein Führungsrohr (7) durchgreift, das von der Außenseite der Trommelbremse zur Halterung (8) führt und dessen Innendurchmesser etwas größer ist als der maximale Außendurchmesser des Nippels (9), die Halterung (8) durch einen querschnittlich etwa U-förmig umgebogenen unteren Endabschnitt des Handbremshebels (5) gebildet ist, der eine von der dem Führungsrohr (7) zugewandten Vorderseite (11) der Halterung (8) zu ihrer Rückseite (12) verlaufende und rampenförmig ansteigende Führungsbahn für den Nippel (9) definiert, und wobei die Rückseite (12) der Halterung (8) mit einer Arretierungseinrichtung (13) für den Nippel (9) versehen ist,
dadurch **gekennzeichnet,** daß
- das Führungsrohr (7) an der Ankerplatte (1) der Trommelbremse befestigt ist und in einem Abstand von der Halterung (8) endet,
- der Nippel (9) bei seinem Vorschub auf eine rampenförmig ansteigende, freie Randkante (10) des umgebogenen unteren Endabschnitts aufläuft, und
- die rampenförmige Randkante (10) um ein solches Maß ansteigt, daß im Verlaufe des Vorschubs des Nippels (9) auf der Randkante (10) der Bremsseilzug (6) gegen die Innenfläche des Führungsrohrs (7) gedrückt wird.

2. Trommelbremse nach Anspruch 1,
dadurch **gekennzeichnet,**
daß die Breite der Öffnung des umgebogenen Endabschnitts von dessen Vorderseite (11) zur Rückseite (12) hin abnimmt.

3. Trommelbremse nach Anspruch 1 oder 2,
dadurch **gekennzeichnet,**
daß der Nippel (9) die Form eines Kegelstumpfes aufweist, dessen kleine Querschnittsfläche dem Ende des Bremsseilzuges (6) zugeordnet ist.

4. Trommelbremse nach einem der Ansprüche 1 bis 3,
dadurch **gekennzeichnet,**
daß die Öffnung des umgebogenen Endabschnitts so bemessen ist, daß der zugehörige vordere Endabschnitt (14) des Nippels (9) zunächst in die Öffnung eintreten kann, während der Nippel (9) bei seinem weiteren Vorschub auf die rampenförmige Randkante (10) aufläuft.

5. Trommelbremse nach einem der Ansprüche 1 bis 4,
dadurch **gekennzeichnet,**
daß die rampenförmige Randkante (10) in einen rückwärtigen Sperrhaken (13) ausläuft, der die Arretierungseinrichtung für den Nippel (9) bildet.

6. Trommelbremse nach einem der Ansprüche 1 bis 5,
dadurch **gekennzeichnet,**
daß zwischen dem Handbremshebel (5) und dem zugehörigen Bremsbacken (3) eine Zugfeder (16) gespannt ist, die den Bremsseilzug (6) stets gespannt hält.

## Claims

1. A drum brake in a motor vehicle, comprising a parking brake which includes a brake cable (6) connected detachably to a hand brake lever (5) arranged in the drum brake by the brake cable (6) being passed through a retaining means (8) which is connected to the hand brake lever (5) and engaging behind the retaining means by a nipple (9) of larger cross sectional dimensions and connected to the corresponding free end of the brake cable (6), which brake cable (6) passes through a guide tube (7) extending from the outside of the drum brake to the retaining means (8) and having an inner diameter which is somewhat greater than the maximum outer diameter of the nipple (9), the retaining means (8) being formed by a lower end portion of the hand brake lever (5) bent cross sectionally approximately into U-shape and defining a guide path which rises like a ramp for the nipple (9) and extends from the front face (11) of the retaining means (8) facing the guide tube (7) to the rear face (12), the rear face (12) of the retaining means (8) being provided with a locking means (13) for the nipple (9), **characterized** in that
- the guide tube (7) is fixed to the anchor plate (1) of the drum brake and terminates at a distance from the retaining means (8),
- the nipple (9), on being advanced, runs up on a free marginal edge (10), rising like a ramp, of the lower bent end portion, and
- the ramp-like marginal edge (10) rises by such a degree that, in the course of the advance of the nipple (9) on the marginal edge (10), the brake cable (6) is pressed against the inside surface of the guide tube (7).

2. The drum brake as claimed in claim 1, characterized in that the width of the opening of the bent end portion diminishes from the front face (11) to the rear face (12) thereof.

3. The drum brake as claimed in claim 1 or 2, characterized in that the nipple (9) is embodied by the frustum of a cone having its small cross sectional area associated with the end of the brake cable (6).

4. The drum brake as claimed in any one of claims 1 to 3, characterized in that the opening of the bent end portion is dimensioned such that the corresponding front end portion (14) of the nipple (9) at first can enter into the opening,while the nipple (9), on being advanced still further, runs up the ramp-like marginal edge (10).

5. The drum brake as claimed in any one of claims 1 to 4, characterized in that the ramp-like marginal edge (10) terminates in a rear locking hook (13) which constitutes the locking means for the nipple (9).

6. The drum brake as claimed in any one of claims 1 to 5, characterized in that a tension spring (16) which constantly keeps the brake cable (6) tight is inserted under tension between the hand brake lever (5) and the corresponding brake shoe (3).

## Revendications

1. Frein à tambour pour un véhicule comprenant un frein de stationnement et un câble de frein (6) correspondant qui est relié de façon démontable à un levier de frein à main (5) agencé dans le tambour de frein, dans lequel le câble de frein (6) est guidé à travers un ancrage (8) solidaire du levier de frein à main 5, et s'accroche derrière cet ancrage par un embout (9) fixé à l'extrémité libre correspondante du câble de frein (6) et possédant de plus grandes dimensions de section transversale, le câble de frein à main (6) passant dans un tube de guidage (7) qui conduit de l'extérieur du frein à tambour jusqu'à l'ancrage (8) et dont le diamètre intérieur est légèrement plus grand que le diamètre extérieur maximum de l'embout (9), l'ancrage (8) est formé par une partie terminale inférieure du levier de frein à main (5) qui est recourbée en prenant en section transversale la forme approximative d'un U, cette partie terminale définissant un trajet de guidage de l'embout (9) qui s'étend du côté avant (11) de l'ancrage (8), qui est dirigé vers le tube de guidage (7), jusqu'à son côté arrière (12), et s'élève en formant une rampe, et le côté arrière (12) de l'ancrage (8) étant muni d'un dispositif d'arrêt (13) pour arrêter l'embout (9),
caractérisé en ce que
- le tube de guidage (7) est fixé au flasque (1) du frein à tambour et sa termine à une certaine distance avant d'atteindre l'ancrage (8),
- dans son mouvement d'avance, l'embout (9) monte sur une arête de bord libre (10) de la partie terminale inférieure recourbée, qui s'élève en formant une rampe,
- l'arête de bord (10) en forme de rampe s'élève dans une mesure telle que, lorsque l'embout (9) avance sur l'arête de bord (10), le câble (6) soit pressé contre la surface interne du tube de guidage (7).

2. Frein à tambour selon la revendication 1,
caractérisé
en ce que la largeur de l'ouverture de la partie terminale recourbée décroît de son côté avant (11) vers son côté arrière (12).

3. Frein à tambour selon la revendication 1 ou 2,
caractérisé
en ce que l'embout (9) présente la forme d'un tronc de cône dont la petite surface de section correspond à l'extrémité du câble de frein (6).

4. Frein à tambour selon une des revendications 1 à 3,
caractérisé
en ce que l'ouverture de la partie terminale recourbée est de dimensions telles que la partie terminale avant correspondante (14) de l'embout (9) puisse s'engager initialement dans l'ouverture tandis que, dans la suite de son avance, l'embout (9) monte sur l'arête de bord (10) en forme de rampe.

5. Frein à tambour selon une des revendications 1 à 4,
caractérisé
en ce que l'arête de bord (10) en forme de rampe se termine par un crochet de retenue arrière (13) qui forme le dispositif d'arrêt pour l'embout (9).

6. Frein à tambour selon une des revendications 1 à 5,
caractérisé
en ce qu'un ressort de traction (16), qui maintient le câble de frein (6) tendu en permanence, est tendu entre le levier de frein à main (5) et la mâchoire de frein (3) correspondante.
